# EUROPEAN PATENT APPLICATION

(11) **EP 4 678 422 A1**
(43) Date of publication of application: **14.01.2026**
(21) Application number: 25184172.2
(22) Date of filing: 20.06.2025
(51) Int. Cl.: B60C 15/024

(54) **PNEUMATIC TIRE**

(30) Priority: 08.07.2024 JP 2024109833; 26.12.2024 JP 2024231314
(71) Applicant: SUMITOMO RUBBER INDUSTRIES, LTD., Kobe-shi, Hyogo 651-0072 (JP)
(72) Inventor: OMORI, CHISATO, Hyogo, 651-0072 (JP); NAGASE, MASAHIRO, Hyogo, 651-0072 (JP); KIKUCHI, HIROSHI, Hyogo, 651-0072 (JP)
(74) Representative: Forresters IP LLP

(57) **Abstract**

A pneumatic tire includes a pair of sidewall portions, and a pair of bead portions each connected to a respective one of the pair of sidewall portions. Each bead portion includes a bead outer surface extending from a bead toe toward outward in the tire axial direction through a bead heel to the sidewall portion. In a state where the tire is mounted on a standard rim, inflated to a standard internal pressure, and loaded with a standard load, each bead portion has a contact region in contact with the standard rim. In at least one of the bead portions, a length of the contact region along the bead outer surface from the origin located 16.5 mm inward in the tire axial direction from a reference line defining the rim width in a tire meridian cross-section is in a range from 37 mm to 45 mm.

## Description

### [Technical Field]

The present invention relates to a pneumatic tire.

### [Background Art]

Conventionally, a variety of structures for the bead portions of pneumatic tires have been proposed (see, for example, Patent Document 1).

### [Prior Art Documents]

### [Patent Document]

[Patent Document 1] Japanese Patent No. 7400329

### [Summary of the Invention]

### [Problem to be Solved by the Invention]

When a load is applied to a pneumatic tire, the bead portions deform with the rim flanges as a fulcrum, generating heat and causing an increase in rolling resistance.

In view of the above circumstances, the present invention has been devised, and its primary object is to provide a pneumatic tire capable of suppressing rolling resistance.

### [Means for Solving the Problem]

The present invention relates to a pneumatic tire including a pair of sidewall portions, and a pair of bead portions each connected to a respective one of the pair of sidewall portions, wherein each of the pair of bead portions comprises a bead outer surface that extends from a bead toe outward in a tire axial direction to a bead heel, and then further to the sidewall portion, in a state where the tire is mounted on a standard rim, inflated to a standard internal pressure, and loaded with a standard load, each of the pair of bead portions has a contact region in contact with the standard rim, and in at least one of the pair of bead portions, a length of the contact region along the bead outer surface from an origin located 16.5 mm inward in the tire axial direction from a reference line defining a rim width of the standard rim in a tire meridian cross-section is in a range from 37 mm to 45 mm.

### [Effects of the Invention]

The pneumatic tire according to the present invention, by having the above-described configuration, can easily suppress rolling resistance.

### [Brief Description of the Drawings]

FIG. 1 is a cross-sectional view of an embodiment of the pneumatic tire according to the present invention;
FIG. 2 is an enlarged cross-sectional view of a bead portion of the pneumatic tire shown in FIG. 1;
FIG. 3 is a cross-sectional view of the pneumatic tire shown in FIG. 1 in a state where the tire is mounted on a standard rim, inflated to a standard internal pressure, and loaded with a standard load;
FIG. 4 is an enlarged cross-sectional view of the bead portion of the pneumatic tire shown in FIG. 3;
FIG. 5 is a graph showing a distribution of contact pressure between the bead portion and the standard rim R in the state shown in FIG. 3; and
FIG. 6 is an enlarged cross-sectional view of the bead portion of the pneumatic tire shown in FIG. 1.

### [Mode for Carrying Out the Invention]

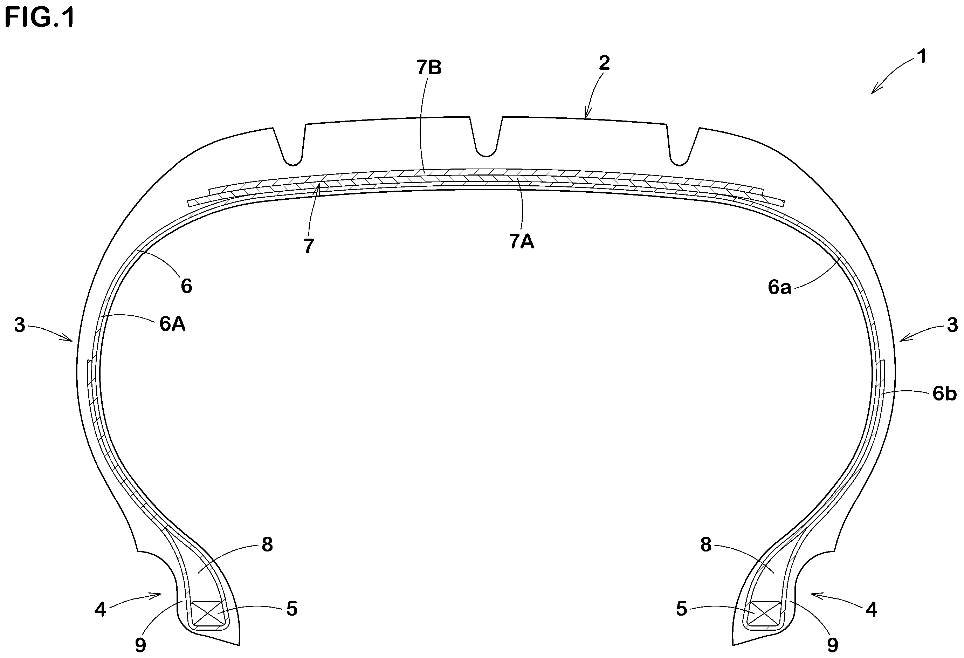

Hereinafter, one or more embodiments of the present invention will be described with reference to the drawings. FIG. 1 is a cross-sectional view of a pneumatic tire 1 (hereinafter sometimes simply referred to as "the tire 1") showing an embodiment of the present invention. FIG. 1 is a cross-sectional view including the rotational axis of the tire in a standard state. As shown in FIG. 1, the tire 1 according to the present embodiment is suitably used as a pneumatic tire for a passenger car, for example. However, the present invention is not limited to such an embodiment and may also be applied to pneumatic tires for heavy loads, for example.

The "standard state" refers to a state in which, for a pneumatic tire defined by various standards, the tire is mounted on a standard rim, inflated to a standard internal pressure, and under no load. In the case of a tire not defined by various standards, the "standard state" means a typical usage condition according to the intended use of the tire, in which the tire is not mounted on a vehicle and is in an unloaded condition. As used herein, unless otherwise specified, dimensions and the like of each part of the tire are values measured in the standard state. In addition, for structures that cannot be measured in the standard state (for example, internal components of the tire 1), the values are measured in a state approximating the standard state as closely as possible.

The "standard rim" refers to the rim that is specified for each tire in the system of standards on which the tire is based. For example, the standard rim referred to as the "standard rim" in the JATMA standards, the "Design Rim" in the TRA standards, and the "Measuring Rim" in the ETRTO standards.

The "standard internal pressure" refers to the air pressure specified for each tire in the system of standards on which the tire is based. For example, the standard internal pressure corresponds to the "maximum air pressure" in the JATMA standards, the maximum value listed in the table "TIRE LOAD LIMITS AT VARIOUS COLD INFLATION PRESSURES" in the TRA standards, and the "INFLATION PRESSURE" in the ETRTO standards.

The tire 1 includes a tread portion 2, a pair of sidewall portions 3, and a pair of bead portions 4. The sidewall portions 3 are continuous with the tread portion 2 on both outer sides in the tire axial direction and extend in the tire radial direction. Each of the bead portions 4 is continuous with a respective one of the sidewall portions 3 on the inner side in the tire radial direction. The tire 1 also includes a carcass 6. The carcass 6 extends between the pair of bead portions 4. In other words, the carcass 6 extends from one of the bead portions 4, through one of the sidewall portions 3, the tread portion 2, and the other sidewall portion 3, to the other bead portion 4.

Each of the bead portions 4 includes a bead core 5 embedded therein. The bead core 5 is, for example, a ring-shaped body formed by winding a steel bead wire (not shown) in multiple layers and rows. A bead apex rubber 8, which extends in a tapered shape, is provided on the radially outer side of each bead core 5.

The carcass 6 is composed, for example, of a single carcass ply 6A. The carcass ply 6A includes, for example, a main body portion 6a and a pair of turned-up portions 6b. The main body portion 6a extends, for example, between the two bead portions 4. The turned-up portions 6b are continuous with the main body portion 6a and are turned up around the respective bead cores 5 from the inner side to the outer side in the tire axial direction.

The carcass ply 6A includes a plurality of carcass cords and topping rubber covering the cords (not shown). As the carcass cords, organic fiber cords such as aramid or rayon are used, for example. The carcass cords are preferably arranged at an angle of from 70 to 90 degrees with respect to the tire equator C.

A pair of clinch rubbers 9, which come into close contact with the rim, are provided on the radially inner side and axially outer side of the carcass 6.

The tread portion 2 of the present embodiment includes, for example, a belt layer 7 disposed on outer side in the tire radial direction of the carcass 6. However, the tread portion 2 is not limited to such a configuration. The belt layer 7 includes a first belt ply 7A adjacent to the carcass 6 and a second belt ply 7B disposed on the outer side in the tire radial direction of the first belt ply 7A. Each of the first belt ply 7A and the second belt ply 7B includes a plurality of belt cords arranged at an angle of from 15 to 45 degrees with respect to the tire circumferential direction, and topping rubber covering the belt cords. The belt cords of the first belt ply 7A and the belt cords of the second belt ply 7B are inclined in opposite directions with respect to the tire circumferential direction. As a result, the tread portion 2 is effectively reinforced.

It is preferable that the length in the tire axial direction of the second belt ply 7B is smaller than the length in the tire axial direction of the first belt ply 7A. As a result, the outer ends of the second belt ply 7B in the tire axial direction are located inward in the tire axial direction of the ends of the first belt ply 7A in the tire axial direction.

A band layer composed of a band ply may be provided on the outer side of the belt layer 7 in the tire radial direction. The band ply includes, for example, band cords arranged at an angle of 5 degrees or less with respect to the tire circumferential direction, and topping rubber covering the band cords. The band layer may be arranged so as to cover the entire belt layer 7, or it may be arranged so as to locally cover a part of the belt layer 7, for example, a region near the axially outer end of the belt layer 7.

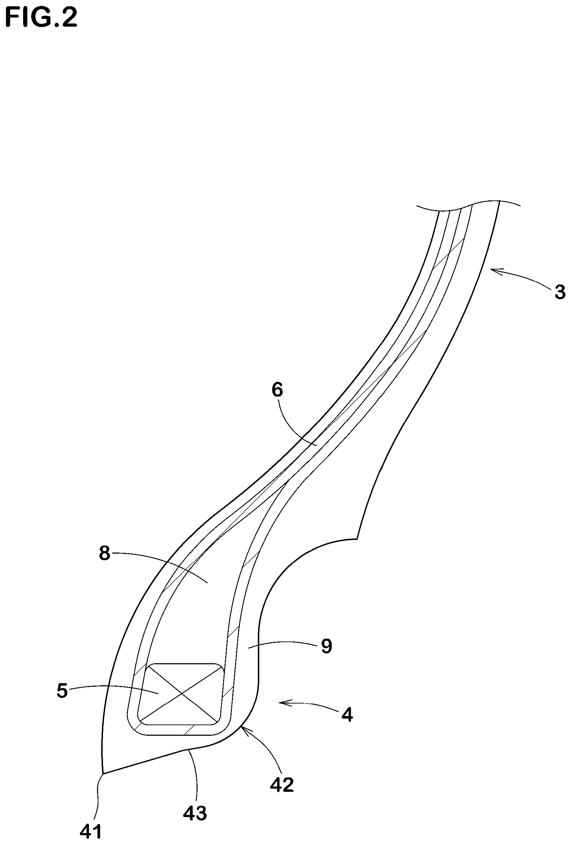

FIG. 2 shows the structure of one of the pair of bead portions 4. Each of the pair of bead portions 4 includes a bead outer surface 43 extending from a bead toe 41 outward in the tire axial direction to a bead heel 42, and then further to the sidewall portion.

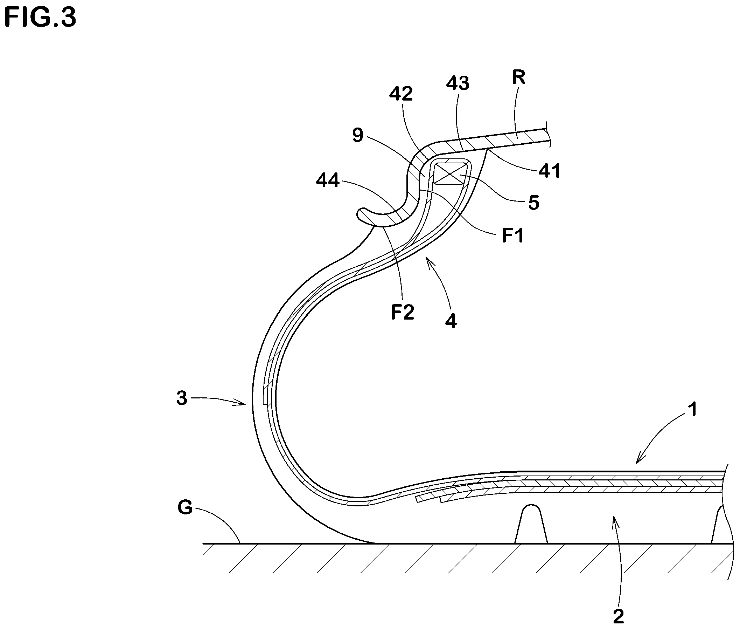

FIG. 3 shows the pneumatic tire 1 in a state in which the tire is mounted on a standard rim R, inflated to a standard internal pressure, and placed under a standard load while contacting a plane G with the tire oriented at zero camber angle (hereinafter referred to as the standard load applied state).

As used herein, the "standard load" refers to the load specified for each tire in the applicable standards within the standard system on which the tire is based. For example, the standard load corresponds to the "maximum load capacity" in JATMA, the maximum value listed in the table "TIRE LOAD LIMITS AT VARIOUS COLD INFLATION PRESSURES" in TRA, and the "LOAD CAPACITY" in ETRTO. In the case of a tire for a passenger car, the standard load is, for example, a load corresponding to 88% of the above-mentioned load.

Each of the pair of bead portions 4 has a contact region 44 in contact with the standard rim R.

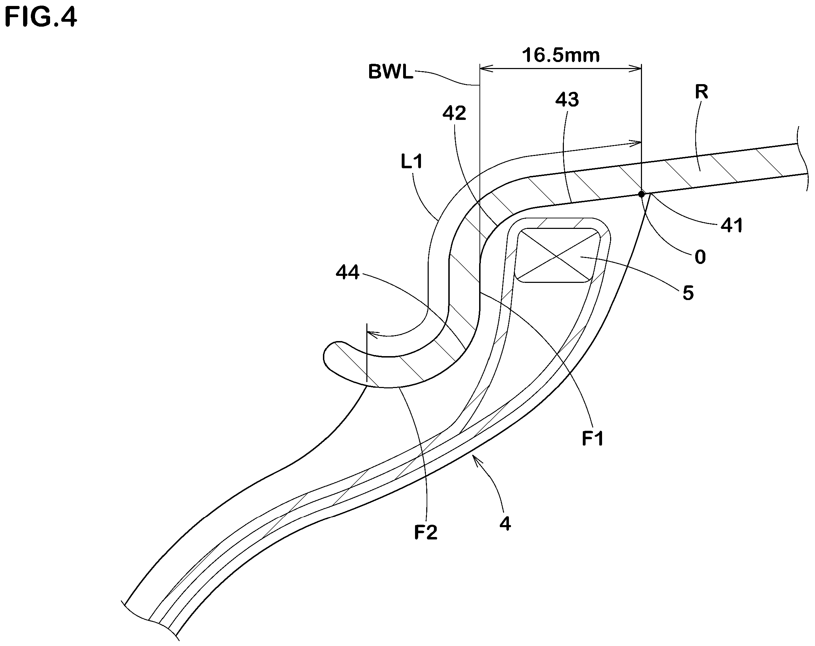

FIG. 4 is an enlarged view of one of the bead portions 4 in the standard load applied state. In the pneumatic tire 1 according to the present invention, in at least one of the pair of bead portions 4, a length L1 of a contact region 44 in a tire meridian cross-section is from 37 mm to 45 mm. The length L1 of the contact region 44 is defined as a length along the bead outer surface 43 from an origin 0 located 16.5 mm inward in the tire axial direction from a reference line BWL that defines the rim width. Since the above position is defined as the origin 0, an appropriate length L1 can be obtained even if the position of the bead toe 41 varies due to a change in the design of the bead seat.

As described above, in a pneumatic tire under load, bending deformation occurs from the sidewall portions 3 to the bead portions 4 with the rim flange serving as a fulcrum. In the pneumatic tire 1 according to the present invention, since the length L1 of the contact region 44 is 37 mm or more, the sidewall portion 3 and the bead portion 4 in the standard load applied state are supported by the rim flange, thereby suppressing the bending deformation. As a result, heat generation in the sidewall portion 3 and the bead portion 4 can be suppressed, rolling resistance can be easily reduced, and fuel efficiency can be improved. In addition, since the gap between the bead outer surface 43 and the rim flange can be reduced, air resistance during running decreases, further improving fuel efficiency.

To further enhance the above effects, the length L1 of the contact region 44 is preferably set to 39 mm or more.

On the other hand, by setting the length L1 of the contact region 44 to 45 mm or less, the volume of the clinch rubber 9, which causes energy loss during running, can be reduced, thereby enabling easy reduction of rolling resistance.

To further enhance the above effects, the length L1 of the contact region 44 is preferably set to 43 mm or less in combination with either of the above-mentioned lower limit values.

As an example, the length L1 of the contact region 44 is preferably from 39 mm to 43 mm.

In the pneumatic tire 1 according to the present invention, it is preferable that, in the other one of the pair of bead portions 4 as well, the length L1 of the contact region 44 in a tire meridian cross-section is in a range from 37 mm to 45 mm.

The same numerical range for further enhancing the above effects also applies to the other bead portion 4 as to one of the bead portions 4. The following description will be given with respect to one of the bead portions 4, but the same applies to the other bead portion 4 as well.

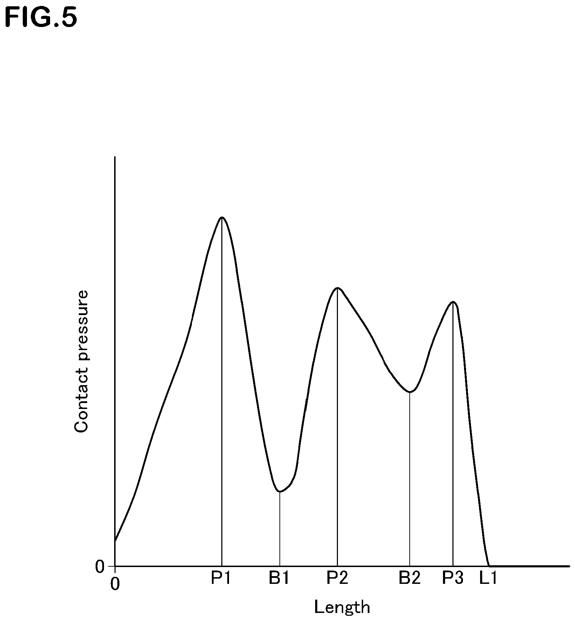

FIG. 5 shows the distribution of contact pressure between the bead portion 4 and the standard rim R in the standard load applied state in the pneumatic tire 1 of the present invention. The horizontal axis represents the length in the direction along the bead outer surface 43 from the origin 0, and the vertical axis represents the contact pressure.

As shown in FIG. 5, it is preferable that the contact pressure between the bead portion 4 and the standard rim R in the standard load applied state has at least three peaks, P1, P2, and P3, in the direction along the bead outer surface 43 from the bead toe 41.

The first peak P1 is a peak that occurs at a first position located on an inner side in the tire radial direction of the bead core 5. In the pneumatic tire 1 according to the present embodiment, the first peak P1 represents the maximum value of the contact pressure between the bead portion 4 and the standard rim R.

The second peak P2 is a peak that occurs at a second position located on an outer side of the bead core 5 in the tire radial direction and in contact with a flange side surface F1 of the standard rim R (see FIGS. 3 and 4). A first bottom B1 is present between the first peak P1 and the second peak P2.

The third peak P3 is a peak that occurs at a third position located on the outermost in the tire axial direction within the contact region and contacting a flange surface F2 of the standard rim R (see FIGS. 3 and 4). A second bottom B2 is present between the second peak P2 and the third peak P3.

It is preferable that a ratio P3/P2 of the third peak P3 to the second peak P2 is in a range from 0.70 to 1.20.

By setting the ratio P3/P2 to 0.70 or more, the sidewall portion 3 and the bead portion 4 in the standard load applied state are effectively supported by the rim flange, thereby suppressing the above-mentioned bending deformation. As a result, heat generation in the sidewall portion 3 and the bead portion 4 can be suppressed, rolling resistance can be easily reduced, and fuel efficiency can be improved.

To further enhance the above effects, the ratio P3/P2 is preferably set to 0.95 or more.

By setting the ratio P3/P2 to 1.20 or less, wear of the clinch rubber 9 can be suppressed.

To further enhance the above effects, the ratio P3/P2 is preferably set to 1.10 or less in combination with either of the above-mentioned lower limit values.

As one example, the ration P3/P2 is preferably from 0.95 to 1.10.

It is preferable that the ratio P2/P1 of the second peak P2 to the first peak P1, and the ratio P3/P1 of the third peak P3 to the first peak P1 are in a range from 0.75 to 0.85. By setting the ratios P2/P1 and P3/P1 in the range from 0.75 to 0.85, wear of the clinch rubber 9 can be suppressed.

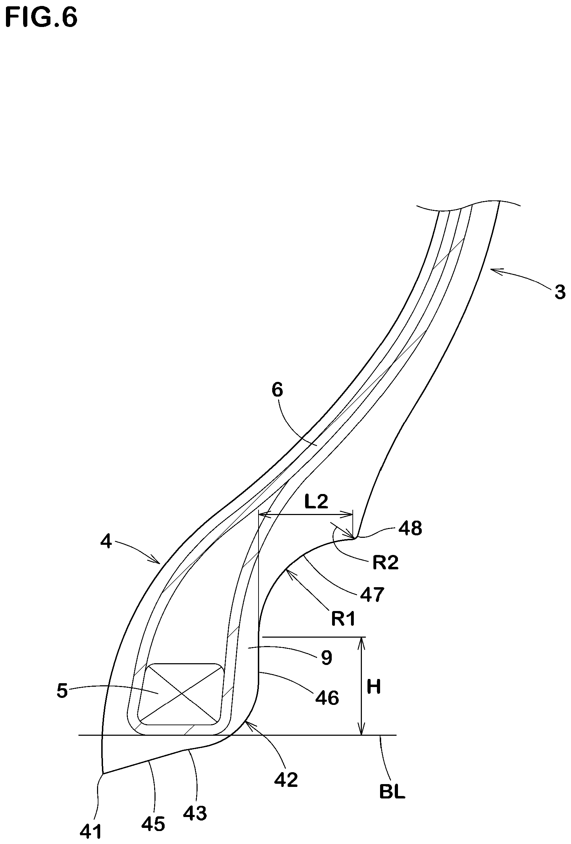

FIG. 6 shows an enlarged view of the bead portion 4 in the standard state in which the tire is mounted on the standard rim and inflated to the standard internal pressure, and under no load.

The pneumatic tire 1 according to the present embodiment includes a bead outer surface 43 that includes a bead base surface 45 extending from the bead toe 41 to the bead heel 42, a bead outer side surface 46 extending from the bead heel 42 outward in the tire radial direction and contacting the flange side surface F1, and a flange receiving surface 47 that is continuous with the bead outer side surface 46, extending outward in the tire axial direction, and curved along the flange surface F2 of the standard rim.

In the standard state, it is preferable that a radius of curvature R1 of the flange receiving surface 47 is from 8.5 mm to 15.0 mm.

By setting the radius of curvature R1 of the flange receiving surface 47 in the range from 8.5 mm to 15.0 mm, the flange receiving surface 47 more easily conforms to the flange surface F2 in the standard load applied state, so that the sidewall portion 3 and the bead portion 4 are more effectively supported by the rim flange, thereby suppressing the above-mentioned bending deformation.

To further enhance the above effects, the radius of curvature R1 of the flange receiving surface 47 is preferably set to 9.5 mm or more. In combination with either of the above-mentioned lower limit values, the radius of curvature R1 is also preferably set to 14.0 mm or less.

As one example, the radius of curvature R1 of the flange receiving surface 47 is preferably in a range from 9.5 mm to 14.0 mm.

In the standard state, it is preferable that a height H from the bead baseline BL to a radially inner end of the flange receiving surface 47 is in a range from 10.0 mm to 14.5 mm. In the present embodiment, since the flange receiving surface 47 is formed continuously with the bead outer side surface 46, the radially inner end of the flange receiving surface 47 is a position where the bead outer side surface 46 transitions to the flange receiving surface 47, and also serves as the radially outer end of the bead outer side surface 46.

By setting the height H from the bead baseline BL to the radially inner end of the flange receiving surface 47 in the range from 10.0 mm to 14.5 mm, the flange receiving surface 47 comes into contact with the rim flange over a wide area even in the standard state (i.e., an unloaded condition), allowing the bead portion 4 to be effectively supported by the rim flange.

To further enhance the above effects, the height H to the radially inner end of the flange receiving surface 47 is preferably set to 11.5 mm or more. In combination with either of the above-mentioned lower limit values, the height H is also preferably set to 13.0 mm or less.

As one example, the height H to the radially inner end of the flange receiving surface 47 is preferably in a range from 11.5 mm to 13.0 mm.

In the standard state, it is preferable that an axial length L2 from the bead outer side surface 46 to an axially outer end of the flange receiving surface 47 is in a range from 7.0 mm to 12.0 mm.

By setting the length L2 from the bead outer side surface 46 to the axially outer end of the flange receiving surface 47 to 7.0 mm or more, the flange receiving surface 47 comes into contact with the rim flange over a wide area in the standard load applied state, and pressure concentration at the axially outer end of the flange receiving surface 47 can be alleviated.

To further enhance the above effects, the length L2 from the bead outer side surface 46 to the outer end of the flange receiving surface 47 is preferably set to 8.5 mm or more.

By setting the length L2 from the bead outer side surface 46 to the axially outer end of the flange receiving surface 47 to 12.0 mm or less, the rubber volume of the bead portion 4 can be reduced, heat generation in the bead portion 4 can be suppressed, and rolling resistance can be easily reduced.

To further enhance the above effects, the length L2 from the bead outer side surface 46 to the outer end of the flange receiving surface 47 is preferably set to 10 mm or less in combination with either of the above-mentioned lower limit values.

As one example, the length L2 from the bead outer side surface 46 to the outer end of the flange receiving surface 47 is preferably from 8.5 mm to 10.0 mm.

The bead outer surface 43 of the present embodiment includes a top surface 48 that is continuous with the flange receiving surface 47 and extends outward in the tire radial direction.

In the standard state, it is preferable that a radius of curvature R2 of the top surface 48 is in a range from 0.3 mm to 5.0 mm.

By setting the radius of curvature R2 of the top surface 48 to 0.3 mm or more, local pressure concentration on the top surface 48 can be alleviated.

To further enhance the above-mentioned effects, the radius of curvature R2 of the top surface 48 is preferably 0.4 mm or more.

By setting the radius of curvature R2 of the top surface 48 to 5.0 mm or less, the flange receiving surface 47 more easily conforms to the flange surface F2, so that the sidewall portion 3 and the bead portion 4 are more effectively supported by the rim flange, thereby suppressing the above-mentioned bending deformation.

To further enhance the above effects, the radius of curvature R2 of the top surface 48 is preferably set to 3.0 mm or less in combination with either of the above-mentioned lower limit values.

As one example, the radius of curvature R2 of the top surface 48 is preferably in a range from 0.4 mm to 3.0 mm.

While the pneumatic tire according to the present invention has been described in detail above, the present invention is not limited to the specific embodiments described and may be implemented in various other forms.

### [Additional Note]

The present invention includes the following aspects.

### [Present Invention 1]

A pneumatic tire comprising:
a pair of sidewall portions, and
a pair of bead portions each connected to a respective one of the pair of sidewall portions,
wherein
each of the pair of bead portions comprises a bead outer surface that extends from a bead toe outward in a tire axial direction to a bead heel, and then further to the sidewall portion,
in a state where the tire is mounted on a standard rim, inflated to a standard internal pressure, and loaded with a standard load, each of the pair of bead portions has a contact region in contact with the standard rim, and
in at least one of the pair of bead portions, a length of the contact region along the bead outer surface from an origin located 16.5 mm inward in the tire axial direction from a reference line defining a rim width of the standard rim in a tire meridian cross-section is in a range from 37 mm to 45 mm.

### [Present Invention 2]

The pneumatic tire according to Present Invention 1, wherein
in the state where the tire is mounted on the standard rim, inflated to the standard internal pressure, and loaded with the standard load, a contact pressure between the at least one of the bead portions and the standard rim has at least three peaks in a direction along the bead outer surface from the bead toe.

### [Present Invention 3]

The pneumatic tire according to Present Invention 2, wherein
each of the pair of bead portions includes a bead core, and
the at least three peaks include
a first peak P1 at a first position located on an inner side in a tire radial direction of the bead core,
a second peak P2 at a second position located on an outer side of the bead core in the tire radial direction and in contact with a flange side surface of the standard rim, and
a third peak P3 at an outermost position in the tire axial direction in the contact region.

### [Present Invention 4]

The pneumatic tire according to Present Invention 3, wherein
a ratio P3/P2 of the third peak P3 to the second peak P2 is in a range of from 0.70 to 1.20.

### [Present Invention 5]

The pneumatic tire according to any one of Present Inventions 1 to 4, wherein
the bead outer surface includes
a bead outer side surface extending outward in the tire radial direction from the bead heel and contacting a flange side surface of the standard rim, and
a flange receiving surface continuous with the bead outer side surface, extending outward in the tire axial direction and curved along a flange surface of the standard rim.

### [Present Invention 6]

The pneumatic tire according to Present Invention 5, wherein
in a state where the tire is mounted on the standard rim, inflated to the standard internal pressure, and under no load, a radius of curvature of the flange receiving surface is in a range from 8.5 mm to 15.0 mm.

### [Present Invention 7]

The pneumatic tire according to Present Invention 5 or 6, wherein
a height from a bead baseline to an inner end of the flange receiving surface in the tire radial direction is in a range from 10.0 mm to 14.5 mm.

### [Present Invention 8]

The pneumatic tire according to any one of Present Inventions 5 to 7, wherein
a length in the tire axial direction from the bead outer side surface to an outer end of the flange receiving surface in the tire axial direction is in a range from 7.0 mm to 12.0 mm.

### [Present Invention 9]

The pneumatic tire according to any one of Present Inventions 5 to 8, wherein
the bead outer surface includes a top surface continuous with the flange receiving surface and extending outward in the tire radial direction, and
a radius of curvature of the top surface is from 0.3 mm to 5.0 mm.

### [Present Invention 10]

The pneumatic tire according to any one of Present Inventions 1 to 9, wherein
the length of the contact region is in a range from 39 mm to 43 mm.

### [Present Invention 11]

The pneumatic tire according to Present Invention 3 or 4, wherein
the first peak P1 is the largest of the at least three peaks.

### [Present Invention 12]

The pneumatic tire according to Present Invention 4, wherein
the ratio P3/P2 is in a range from 0.95 to 1.10.

### [Present Invention 13]

The pneumatic tire according to any one of Present Inventions 2 to 4, wherein
the at least three peaks consist of three peaks.

### [Present Invention 14]

The pneumatic tire according to Present Invention 3 or 4, wherein
a ratio P2/P1 of the second peak P2 to the first peak P1, and a ratio P3/P1 of the third peak P3 to the first peak P1 are in a range from 0.75 to 0.85.

### [Present Invention 15]

The pneumatic tire according to any one of Present Inventions 6 to 9, wherein
a length in the tire axial direction from the bead outer surface to an outer end of the flange receiving surface in the tire axial direction is in a range from 7.0 mm to 12.0 mm.

### [Description of Reference Numerals]

- 1: Pneumatic tire
- 3: Sidewall portion
- 4: Bead portion
- 5: Bead core
- 41: Bead toe
- 42: Bead heel
- 43: Bead outer surface
- 44: Contact region
- 46: Bead outer side surface
- 47: Flange receiving surface
- 48: Top surface
- BL: Bead baseline
- F1: Flange side surface
- F2: Flange surface
- H: Height
- P1: First peak
- P2: Second peak
- P3: Third peak
- R: Standard rim
- R1: Radius of curvature
- R2: Radius of curvature

## Claims

1. A pneumatic tire comprising:
a pair of sidewall portions, and
a pair of bead portions each connected to a respective one of the pair of sidewall portions,
wherein
each of the pair of bead portions comprises a bead outer surface that extends from a bead toe outward in a tire axial direction to a bead heel, and then further to the sidewall portion,
in a state where the tire is mounted on a standard rim, inflated to a standard internal pressure, and loaded with a standard load, each of the pair of bead portions has a contact region in contact with the standard rim, and
in at least one of the pair of bead portions, a length of the contact region along the bead outer surface from an origin located 16.5 mm inward in the tire axial direction from a reference line defining a rim width of the standard rim in a tire meridian cross-section is in a range from 37 mm to 45 mm.

2. The pneumatic tire according to claim 1, wherein
in the state where the tire is mounted on the standard rim, inflated to the standard internal pressure, and loaded with the standard load, a contact pressure between the at least one of the bead portions and the standard rim has at least three peaks in a direction along the bead outer surface from the bead toe.

3. The pneumatic tire according to claim 2, wherein
each of the pair of bead portions includes a bead core, and
the at least three peaks include
a first peak P1 at a first position located on an inner side in a tire radial direction of the bead core,
a second peak P2 at a second position located on an outer side of the bead core in the tire radial direction and in contact with a flange side surface of the standard rim, and
a third peak P3 at an outermost position in the tire axial direction in the contact region.

4. The pneumatic tire according to claim 3, wherein
a ratio P3/P2 of the third peak P3 to the second peak P2 is in a range of from 0.70 to 1.20.

5. The pneumatic tire according to any one of claims 1 to 4, wherein
the bead outer surface includes
a bead outer side surface extending outward in the tire radial direction from the bead heel and contacting a flange side surface of the standard rim, and
a flange receiving surface continuous with the bead outer side surface, extending outward in the tire axial direction and curved along a flange surface of the standard rim.

6. The pneumatic tire according to claim 5, wherein
in a state where the tire is mounted on the standard rim, inflated to the standard internal pressure, and under no load, a radius of curvature of the flange receiving surface is in a range from 8.5 mm to 15.0 mm.

7. The pneumatic tire according to claim 5 or 6, wherein
a height from a bead baseline to an inner end of the flange receiving surface in the tire radial direction is in a range from 10.0 mm to 14.5 mm.

8. The pneumatic tire according to any one of claims 5 to 7, wherein
a length in the tire axial direction from the bead outer side surface to an outer end of the flange receiving surface in the tire axial direction is in a range from 7.0 mm to 12.0 mm.

9. The pneumatic tire according to any one of claims 5 to 8, wherein
the bead outer surface includes a top surface continuous with the flange receiving surface and extending outward in the tire radial direction, and
a radius of curvature of the top surface is from 0.3 mm to 5.0 mm.

10. The pneumatic tire according to any one of claims 1 to 9, wherein
the length of the contact region is in a range from 39 mm to 43 mm.

11. The pneumatic tire according to claim 3 or 4, wherein
the first peak P1 is the largest of the at least three peaks.

12. The pneumatic tire according to claim 4, wherein
the ratio P3/P2 is in a range from 0.95 to 1.10.

13. The pneumatic tire according to any one of claims 2 to 4, wherein
the at least three peaks consist of three peaks.

14. The pneumatic tire according to claim 3 or 4, wherein
a ratio P2/P1 of the second peak P2 to the first peak P1, and a ratio P3/P1 of the third peak P3 to the first peak P1 are in a range from 0.75 to 0.85.

15. The pneumatic tire according to any one of claims 6 to 9, wherein
a length in the tire axial direction from the bead outer surface to an outer end of the flange receiving surface in the tire axial direction is in a range from 7.0 mm to 12.0 mm.
